# EUROPÄISCHE PATENTSCHRIFT

(11) **EP 4 038 293 B1**
(45) Veröffentlichungstag und Bekanntmachung des Hinweises auf die Patenterteilung: **01.11.2023**
(21) Anmeldenummer: 20781338.7
(22) Anmeldetag: 25.09.2020
(51) Int. Cl.: F16H 25/22, F16K 31/44, F16K 31/50, F16H 37/12, F15B 15/14, F15B 15/02, F16H 25/20

(54) **EINE HOCHDRUCKREGELARMATUR FÜR EINE HOCHDRUCKANLAGE MIT EINER VORRICHTUNG ZUM BETÄTIGEN EINES VENTILS**
A HIGH-PRESSURE FITTING FOR A HIGH-PRESSURE INSTALLATION WITH A DEVICE FOR ACTUATING A VALVE
UN RACCORD HAUTE PRESSION POUR UNE INSTALLATION HAUTE PRESSION AVEC UN DISPOSITIF POUR ACTIONNER UNE VANNE

(30) Priorität: 02.10.2019 DE 102019126650
(43) Veröffentlichungstag der Anmeldung: 10.08.2022
(73) Patentinhaber: Uhde High Pressure Technologies GmbH, 58093 Hagen (DE); thyssenkrupp AG, 45143 Essen (DE)
(72) Erfinder: RUTKOWSKI, Jan, 44651 Herne (DE); DENZ, Thorsten, 58642 Iserlohn (DE)
(74) Vertreter: thyssenkrupp Intellectual Property GmbH
(86) Internationale Anmeldenummer: PCT/EP2020/076837
(87) Internationale Veröffentlichungsnummer: WO 2021/063808

(56) Entgegenhaltungen:
- EP-A1- 0 003 687
- WO-A1-2012/107868
- DE-A1- 2 924 536
- US-A- 3 153 372
- US-A1- 2017 122 416
- US-A1- 2017 335 991

## Beschreibung

Die Erfindung betrifft eine Hochdruckregelarmatur für eine Hochdruckanlage mit einer Vorrichtung zum Betätigen eines Ventils für eine Hochdruckanlage, insbesondere für eine Anlage zur Herstellung von Polyethylen mit den Merkmalen des Anspruchs 1. Eine derartige Vorrichtung ist beispielsweise durch das Hochdruckregelventil 16531-CZA der Firma Fischer Controls bekannt.

Eine Hochdruckregelarmatur soll über einen relativ kleinen Stellweg (bspw. <9 mm) eine möglichst hohe Regelgenauigkeit erzielen. Der Stellweg wird bei dem bekannten Hochdruckregelventil von einer linearbeweglichen Ventilspindel ausgeführt. Da die Betriebsdrücke 2000 bar(g), (2000 bar gauge - Relativdruck) und höher betragen können, sind entsprechend hohe Antriebskräfte zum Verfahren der Ventilspindel und zur Gewährleistung der Dichtheit der Armaturen notwendig. Üblicherweise wird für eine derartige Armatur eine hydraulische Antriebseinheit verwendet. Der Einsatz einer Ölhydraulik ist allerdings mit Aufwand verbunden.

Pneumatische Hilfsenergie ist in Hochdruckanlagen zum Betrieb von Antrieben aufgrund des Anlagenkonzepts als Nebenprodukt in der Regel vorhanden. Der Einsatz einer pneumatischen Antriebslösung für eine Hochdruckarmatur ist daher zweckmäßig. Druckluft besitzt jedoch im Vergleich zu einer Ölhydraulik eine geringere energetische Dichte. Dies führt dazu, dass pneumatische Antriebskonzepte größere Wirkflächen zum Aufbringen der erforderlichen Stellkräfte benötigen. Da große pneumatische Antriebe zumeist mit großen Hüben einhergehen, ergibt sich ein Widerspruch zu dem oben genannten kleinen Regelhub bei hohen Stellkräften.

Ein weiterer Nachteil ist die Kompressibilität von Luft. Insbesondere in hochdynamischen Prozessen sind hierdurch Störeinflüsse auf die Regelgüte zu erwarten.

Typische Anlagen für die oben genannten Betriebszustände sind Hochdruckanlagen, die zur Herstellung von Polyethylen mit geringer Dichte (kurz LDPE) genutzt werden. Gerade bei diesen Anlagen sind präzise Druckführungen für die Qualität des Produktes und zum sicheren Betrieb der Anlage unerlässlich.

Die früher entwickelte, eingangs genannte pneumatische Lösung der Firma Fischer Controls (Hochdruckregelventil 16531-CZA) besteht aus einer Rahmenlaterne, an welcher zwei doppeltwirkende pneumatische Kolbenantriebe angebracht sind. Diese Antriebe bewegen jeweils ein Hebelgestänge. Auf diese Weise werden zwei gegenläufige Schwenkbewegungen erzeugt (im und entgegen des Uhrzeigersinns). Da die Hauptbewegungsrichtung der eigentlichen Ventilspindel, senkrecht zu der Linearbewegung der Kolbenantriebe verläuft, muss die Umlenkung der Bewegungsrichtung erfolgen. Hierzu wird ein Kugelgewindetrieb eingesetzt, der mit den Hebelgestängen der Antriebe verbunden ist. Auf der Abtriebsseite ist der Kugelgewindetrieb mit der Ventilspindel gekoppelt.

Bei dem bekannten Hochdruckregelventil bewegt ein erster Antrieb mit Hebelgestänge die Spindelschraube. Ein zweiter Antrieb bewegt mit dem Hebelgestänge die Spindelmutter. Die gegenläufige Schwenkrichtung sorgt dafür, dass beide Antriebe mit ausfahrender und einfahrender Antriebsspindel die Ventilspindel stets in dieselbe Richtung bewegen.

Eine Herausforderung dieser pneumatischen Lösung besteht darin, beide Antriebe aufeinander abzustimmen, da sie jeweils über einen eigenen Stellungsregler verfügen. Im Übergabebereich arbeiten beide Antriebe gleichzeitig und die Toleranzen der Regler addieren sich. Hierbei ist ein besonderes Augenmerk auf den tatsächlichen Arbeitspunkt des Ventils zu legen.

Ein weiterer Nachteil ergibt sich daraus, dass in der Schließstellung nur ein Antrieb arbeiten darf. Da eine Entkoppelung der Drehbewegung von Gewindespindel und Ventilspindel nicht ohne weiteres möglich ist, darf der Antrieb, der die Schwenkbewegung an der Spindel erzeugt, nicht in der Nähe der Schließstellung arbeiten. Andernfalls droht eine Relativbewegung zwischen den Dichtelementen des Ventils (Sitz und Spindelkopf) unter Kraft, was zu einem erhöhten Verschleiß der Elemente oder im schlimmsten Fall zur Kaltverschweißung führt.

Aus der US 3 153 372 A ist ein pneumatisch angetriebener Stellungsregler bekannt geworden. Der Stellungsregler umfasst ein Antriebseinheit und einem Gewindetrieb, der ein Gehäuse, eine Spindel und eine Spindelmutter aufweist, wobei die Antriebsseite des Gewindetriebs mit der Antriebseinheit zum Einleiten einer rotatorischen Antriebsbewegung gekoppelt und die Abtriebsseite des Gewindetriebs mit dem Ventil zur Übertragung einer translatorische Abtriebsbewegung verbindbar ist, wobei der Gewindetrieb ein Getriebe bildet, das die Antriebskraft der Antriebseinheit in eine Abtriebskraft des Gewindetriebs zur Betätigung des Ventile übersetzt.

Der Erfindung liegt die Aufgabe zugrunde, die bekannte Vorrichtung zum Betätigen eines Ventils einer Hochdruckregelarmatur für eine Hochdruckanlage dahingehend zu verbessern, dass die Vorrichtung einen möglichst wartungsarmen Betrieb und eine möglichst präzise Regelung bei hohen Drücken ermöglicht. Der Erfindung liegt ferner die Aufgabe zugrunde, eine Hochdruckregelarmatur anzugeben.

Erfindungsgemäß wird die Aufgabe mit Blick auf die Hochdruckregelarmatur für eine Hochdruckanlage mit einer Vorrichtung zum Betätigen eines Ventils für eine Hochdruckanlage durch den Gegenstand des Anspruchs 1 gelöst.

Konkret wird die Aufgabe durch eine Hochdruckregelarmatur für eine Hochdruckanlage mit einer Vorrichtung zum Betätigen eines Ventils für eine Hochdruckanlage mit einer pneumatischen Antriebseinheit und einem Gewindetrieb gelöst, der ein Gehäuse, eine Spindel und eine Spindelmutter aufweist. Die Anlage kann eine Anlage zur Herstellung von Polyethylen sein. Die Antriebsseite des Gewindebetriebs ist mit der Antriebseinheit zum Einleiten einer rotatorischen Antriebsbewegung gekoppelt. Die Abtriebsseite des Gewindetriebs kann im Gebrauch mit dem Ventil zur Übertragung einer translatorische Abtriebsbewegung verbunden werden. Der Gewindetrieb bildet ein Getriebe, das die Antriebskraft der Antriebseinheit in eine Abtriebskraft des Gewindetriebs zu Betätigung des Ventils übersetzt.

Die Erfindung hat verschiedene Vorteile:
Durch die Ausbildung des Gewindetriebs als Getriebe wird die Abtriebskraft des Gewindetriebs bezogen auf die jeweilige Antriebskraft erhöht. Mit Blick auf die Kraftverhältnisse zwischen Getriebeeingang und Getriebeausgang handelt sich bei den Getriebe um ein Übersetzungsgetriebe. Gleichzeitig wird der Stellweg auf der Abtriebsseite des Gewindetriebs, mit dem das Ventil im Gebrauch betätigt wird, bezogen auf die Antriebsbewegung des Gewindetriebs untersetzt. Damit ist ein kleiner Stellweg zur Betätigung des Ventils selbst bei großen Stellwegen auf der Antriebsseite realisierbar. Mit Blick auf die Stellwegverhältnisse zwischen Getriebeeingang und Getriebeausgang wirkt das Getriebe als Untersetzung.

Die Ausbildung des Gewindetriebs als Getriebe bedeutet, dass der Gewindetrieb wenigstens ein Getriebeelement aufweist, das zusätzlich zu den Elementen des Gewindetriebs vorgesehen ist, die die Kraftübertragung zwischen Spindel und Spindelmutter bewirken. Das Getriebeelement beeinflusst das Übersetzungsverhältnis des Gewindetriebs. Das Getriebeelement ist in den Gewindetrieb integriert.

Durch das Übersetzungsverhältnis innerhalb des Gewindetriebs werden einerseits die Beträge von Kraft und Weg verändert, anderseits werden das Ventil, konkret die Ventilspindel und der Antrieb voneinander entkoppelt.

Die Übersetzung ermöglicht den Einsatz eines kleinen Antriebs mit geringer Wirkfläche und großem Antriebsstellweg, da die kleine Antriebskraft durch das Getriebe in eine hohe Kraft übersetzt und der große Antriebsstellweg in einen kleinen Abtriebsstellweg untersetzt wird. Das zwischengesetzte, starre Getriebe entkoppelt Antrieb und Ventilspindel voneinander. Störeinflüsse aus dem dynamischen Prozess werden reduziert. Der Antrieb und der Stellungsregler arbeiten somit weitestgehend unabhängig von Sekundäreffekten, was zu einer Erhöhung der Genauigkeit führt.

Die Ausbildung des Gewindetriebs als Getriebe erhöht ferner die Traglast der Einheit. Die höhere Traglast trägt zu einer höheren mechanischen Sicherheit bei, die ein Kriterium hinsichtlich des Explosionsschutzes ist. Die notwendige Dimension eines Kugelgewindetriebs zum Erreichen ähnlicher Sicherheiten ist erheblich größer.

Im Unterschied zu der im Stand der Technik bekannten Hochdruckregelarmatur mit Kugelgewindetrieb kann bei der Erfindung auf eine Rotationsbewegung am Abtrieb, d. h. an der Spindelmutter verzichtet werden. Dies schont die Materialien im Ventil (Spindel, Sitz, Packung, Führungen). Auch die Gefahr des Lösens der Packungsschraube wird reduziert.

Unter einem Kugelgewindetrieb wird ein Schraubgetriebe mit Kugeln verstanden, die zwischen Schraube und Mutter angeordnet sind. Schraube und Mutter weisen entsprechende schraubenförmige Rillen auf, die zusammengesetzt einen mit Kugeln gefüllten, schraubenförmigen Kanal bilden. Die formschlüssige Verbindung im Gewinde quer zur Schraubenlinie erfolgt durch die Kugeln. Bei einer Relativdrehung zwischen Schraube und Mutter rollen die Kugeln im Kanal und bewegen sich zum vorderen Mutterende hin. Dort werden die Kugeln aufgenommen und durch einen zur Gewindeachse parallelen Kanal zum hinteren Mutterende geführt und dort wieder in den schraubenförmigen Kanal eingeleitet.

Bevorzugte Ausführungsformen der Erfindung sind in den Unteransprüchen angegeben.

Bei einer besonders bevorzugten Ausführungsform umfasst der Gewindetrieb einen Planetenrollengewindetrieb, insbesondere einen Planetenrollengewindetrieb ohne Rollenrückführung. Dieser zeichnet sich durch höhere Traglastzahlen im Vergleich zu konventionellen Kugelgewindetrieben aus. Da die Tragzahlen eine Kenngröße für die Lebensdauer unter Last darstellt, sind durch den Einsatz des Planentenrollentriebs höhere Stellkräfte als bei Kugelgewindetrieben möglich.

Vorzugsweise weist der Planetenrollengewindetrieb mehrere Planetenrollen auf, die zwischen der Spindel und der Spindelmutter auf deren Umfang verteilt angeordnet und mit wenigstens einem innen verzahnten Ring, insbesondere mit zwei innen verzahnten Ringen, in Eingriff sind. Der innen verzahnte Ring ist mit der Spindelmutter drehfest verbunden. Bei Rotation der Planetenrollen um die Spindelachse ergibt sich eine axiale Relativbewegung zwischen der Spindelmutter und der Spindel, wobei gleichzeitig die antriebsseitig am Gewindetrieb anliegende Antriebskraft bzw. das sich daraus ergebende Antriebsmoment in die abtriebsseitig am Gewindetrieb abgreifbare Abtriebskraft übersetzt wird.

Vorzugsweise sind die Spindel drehbar und die Spindelmutter entlang der Spindel axial verschieblich im Gehäuse gelagert. Damit wird die Drehbewegung der Spindel in eine translatorische Bewegung der Spindelmutter umgewandelt, sodass das zu betätigende Ventil durch eine lineare Bewegung geöffnet bzw. geschlossen werden kann.

Bei einer weiteren bevorzugten Ausführungsform ist die Spindelmutter mit einem Kolben verbunden oder als Kolben ausgebildet, der im Gehäuse axial geführt und mit dem Ventil verbindbar ist, wobei das Gehäuse an den Hub des Kolbens angepasst ist. Die Spindelmutter und der Kolben können also als zwei gesonderte Bauteile miteinander verbunden sein, beispielsweise stoffschlüssig (bspw. durch Schweißen) oder mechanisch (bspw. durch Verschrauben oder dgl.). Es ist auch möglich, dass die Spindelmutter und der Kolben ein einziges Bauteil bilden, die Spindelmutter also als Kolben ausgebildet ist. In diesem Fall sind die Spindelmutter und der Kolben monolithisch ausgebildet. Das Gehäuse des Gewindetriebs ist dabei so angepasst, dass der Hub des Kolbens im Gehäuse ausreichend groß ist, um den für die Betätigung des Ventils erforderlichen Stellweg zu ermöglichen.

Der Kolben gestattet eine einfache Anbindung des Getriebes an das Ventil.

Vorzugsweise bilden der Kolben und die Spindelmutter einen Freiraum zur Aufnahme des abtriebsseitigen Spindelendes, sodass vermieden wird, dass das abtriebsseitige Spindelende mit dem Kolben bei der axiale Relativbewegung zwischen der Spindel und der Spindelmutter kollidiert. Diese Ausführungsform ist vorteilhaft, wenn in einer Endlage aufgrund der geometrischen Ausführung der Spindel und der Spindelmutter das Spindelende in Axialrichtung über die Spindelmutter hinaus ragt.

Der Kolben kann einen Zapfen aufweisen, der aus dem Gehäuse axial herausgeführt und mit dem Ventil durch eine Kupplung verbindbar ist. Der Zapfen vereinfacht die Anbindung des Ventils an das Getriebe.

Bei einer besonders bevorzugten Ausführungsform ist die Spindelmutter spielfrei angeordnet. Dadurch wird die Genauigkeit der Ventilregelung erhöht. Insbesondere wird das Ansprechverhalten bei Richtungsumkehr verbessert. Da es sich bei der spielfreien Anordnung nicht um eine tatsächliche Vorspannung, sondern um eine Toleranzfertigung nahe einer Nulltoleranz handelt, ergibt sich kein Einfluss auf den Wirkungsgrad des Getriebes.

Der Gewindetrieb ist vorzugsweise ölgeschmiert. Damit das Getriebe dauerhaft geschmiert ist, kann sich der Gewindetrieb in einem Gehäuse mit Ölfüllung befinden. Die Ölfüllung im geschlossenen Gewindetrieb ist für den Explosionsschutz von Vorteil. Das Öl ist hinsichtlich seines Viskositätsverhaltens auf Umgebungstemperaturen zwischen - 20°C und +80°C ausgewählt. Sind tiefere Temperaturen als -20°C am Einsatzort zu erwarten, kann durch ein alternatives Öl die Einsatztemperatur auf -40°C reduziert werden. Die maximal zulässige Temperatur ist in diesem Fall jedoch auf +50°C beschränkt.

Bei einer bevorzugten Ausführungsform verbindet ein Vorschaltgetriebe, insbesondere ein Übersetzungsvorschaltgetriebe, die Antriebseinheit und den Gewindetrieb. Damit wird ein Teil der Gesamtübersetzung der Vorrichtung durch das Vorschaltgetriebe und ein Teil der Gesamtübersetzung durch das in den Gewindetrieb integrierte Getriebe geleistet. Dadurch kann die Gesamtübersetzung der Vorrichtung weiter erhöht werden. Es sind höhere Stellkräfte und kürzere Stellwege auf der Abtriebsseite des Gewindetriebs möglich.

Das Vorschaltgetriebe kann ein Koppelgetriebe und/oder ein Zahnstangengetriebe umfassen. Das Koppelgetriebe kann beispielsweise ein Hebelgestänge sein. Derartige Getriebe sind einfach und robust. Sie ermöglichen die Umwandlung einer translatorische in eine rotatorische Bewegung, die als Antriebsbewegung für den Gewindetrieb geeignet ist.

Bei einer besonders bevorzugten Ausführungsform umfasst die Antriebseinheit wenigstens eine pneumatische Kolben-Zylindereinheit, sodass die als Hilfsenergie in Hochdruckanlagen zur Verfügung stehende Druckluft für den Antrieb des Gewindetriebs genutzt werden kann. Die Umwandlung der lineare Bewegung des Kolbens der Kolben-Zylindereinheit in eine rotatorische Antriebsbewegung erfolgt vorzugsweise durch das vorstehend erläuterte Vorschaltgetriebe. Damit ist die pneumatische Antriebseinheit indirekt, d. h. über das Vorschaltgetriebe, mit dem Gewindetrieb verbunden.

Alternativ ist es möglich, die Antriebseinheit direkt mit der Antriebsseite des Gewindetriebs zu verbinden. Bei dieser Ausführungsform wird die Gesamtübersetzung der Vorrichtung durch den als Getriebe ausgebildeten Gewindetrieb bewirkt. Die direkte Verbindung der Antriebseinheit mit dem Gewindetrieb vereinfacht die Konstruktion.

Eine Möglichkeit zur Realisierung der direkten Verbindung besteht darin, dass die Antriebseinheit wenigstens einen pneumatischen Schwenkantrieb, insbesondere Drehflügelantrieb umfasst. Der Schwenkantrieb kann direkt mit der Spindel des Gewindetriebs verbunden sein. Pneumatische Schwenkantriebe, insbesondere Drehflügelantriebe, sind als Stellglieder an sich bekannt. Der Drehflügelantrieb weist einen in einem Gehäuse angeordneten Drehflügel auf. Der Drehflügel ist schwenkbar im Gehäuse gelagert und kann durch Beaufschlagung mit Druckluft verschwenkt werden, um die Spindel des Gewindetriebs anzutreiben. Das Gehäuse weist entsprechende Druckluftanschlüsse auf.

Bei einer weiteren bevorzugten Ausführungsform ist das antriebsseitige Spindelende des Gewindetriebs formschlüssig und/oder kraftschlüssig mit der Antriebseinheit, insbesondere mit dem Vorschaltgetriebe verbunden.

Beispielsweise kann die Spindel, um das erforderliche Drehmoment in das Getriebe einzuleiten, einen Vierkant aufweisen, der am antriebsseitigen Spindelende ausgebildet ist. An diesen Vierkant ist die Antriebseinheit, insbesondere das Vorschaltgetriebe, beispielsweise ein Hebelarm des Vorschaltgetriebes, geklemmt. Die Klemmverbindung des Vierkants bietet einen Vorteil gegenüber einer ungeklemmten Verbindung. Eine Vierkantverbindung ist prinzipiell formschlüssig und daher mit Spiel verbunden. Durch die Klemmung bleibt die formschlüssige Verbindung grundsätzlich erhalten. Das Spiel wird durch die aufgebrachte Kraft an den Nabenflächen des Vierkants eliminiert. Zudem ist keine axiale Sicherung erforderlich. Dennoch kann der Hebelarm durch das Lösen der Schrauben ohne Demontage des Antriebs und des Getriebes ausgebaut werden.

Eine andere Möglichkeit der Drehmomenteinleitung ist die Verbindung des antriebsseitigen Spindelendes mit der Antriebseinheit, insbesondere mit dem Vorschaltgetriebe mittels eines Kegelpressverbandes. Hierbei werden Welle, d.h. Spindel, und Nabe, d.h. Hebelarm, jeweils konisch ausgeführt. Die Drehmomentübertragung geschieht kraftschlüssig durch Reibschluss. Um den nötigen Anpressdruck aufzubringen, kann das Spindelende mit einem Gewinde versehen sein. Das Gewinde kann sowohl ein Innengewinde als auch ein Außengewinde sein. Die axiale Vorspannung erfolgt durch eine Schraube oder eine Mutter.

Die Antriebseinheit kann als einzige Antriebseinheit mit der Spindel verbunden sein. Bei dieser Ausführungsform wird im Gegensatz zum Stand der Technik bewusst auf eine weitere Antriebseinheit verzichtet, die im Stand der Technik die Spindelmutter zusätzlich zur Spindel antreibt. Dies ist möglich, weil der Gewindetrieb als Getriebe ausgebildet ist und so die erforderliche Übersetzung aufbringt. Damit entfallen die im Stand der Technik bestehenden Synchronisationsprobleme zwischen den beiden pneumatischen Antrieben. Die Erfindung ist nicht darauf eingeschränkt, dass der Gewindetrieb durch einen einzigen pneumatischen Antrieb betätigt wird, auch wenn dies eine bevorzugte Ausführungsform der Erfindung ist. Inverse Antriebskonzepte sind möglich, bei denen die Schraubenmutter durch den pneumatischen Antrieb angetrieben wird.

Das Übersetzungsverhältnis zwischen Abtriebskraft und Antriebskraft trägt vorzugsweise 10:1 bis 200:1, insbesondere 30:1 bis 100:1. Die vorstehenden Übersetzungsverhältnisse sind für den Einsatz der Vorrichtung in Hochdruckanlagen, besondere in Hochdruckanlagen zur Herstellung von Polyethylen, insbesondere von LDPE besonders geeignet.

Der abtriebsseitige Stellweg des Gewindetriebs kann maximal 9 mm, insbesondere von 0 mm bis 9 mm, insbesondere von 0 mm bis 8 mm, insbesondere von 0 mm bis 5 mm, insbesondere von 0 mm bis 4 mm betragen.

Die Erfindung wird anhand eines Ausführungsbeispiels unter Bezug auf die beigefügten schematischen Zeichnungen mit weiteren Einzelheiten näher erläutert.

In diesen zeigen
- Fig. 1: eine perspektivische Ansicht eines Ausführungsbeispiels einer Vorrichtung zum Betätigen eines Ventils;
- Fig. 2: eine Seitenansicht der Vorrichtung gemäß Fig. 1;
- Fig. 3: eine Draufsicht der Vorrichtung gemäß Fig. 1;
- Fig. 4: eine schematische Ansicht der Vorrichtung gemäß Fig. 1 mit Bewegungsangaben und
- Fig. 5: eine Detailansicht des Gewindetriebs gemäß Fig. 4.

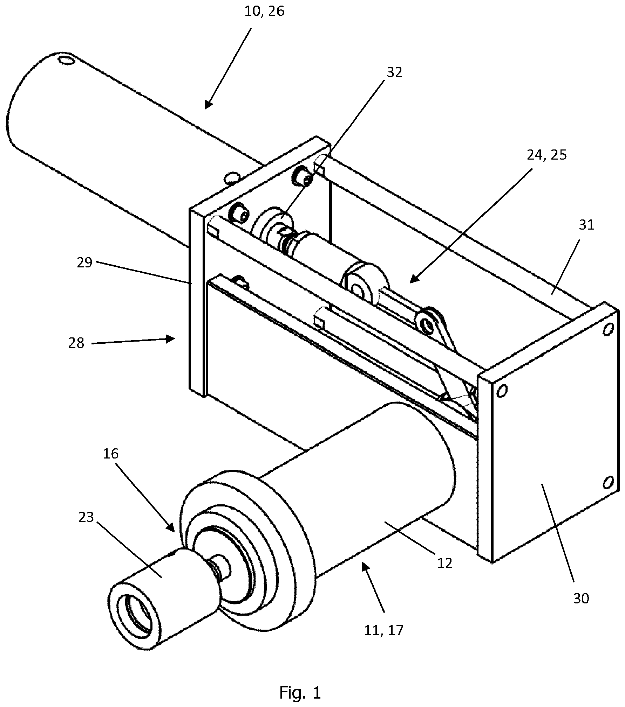

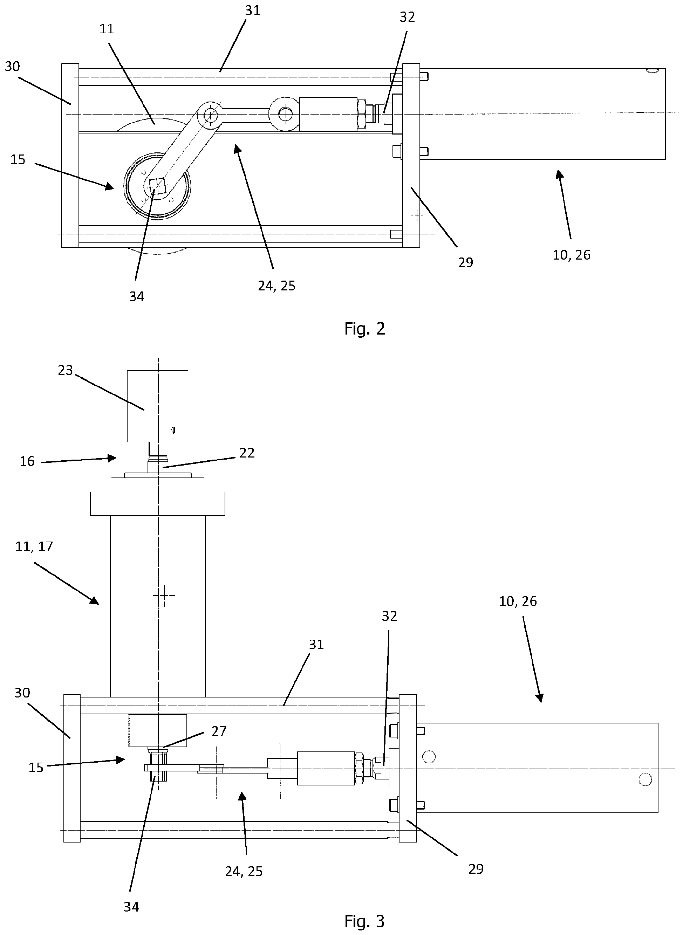

Figuren 1 bis 5 zeigen ein Beispiel für eine Vorrichtung zum Betätigen eines Ventils, die für den Einsatz in einer Hochdruckanlage geeignet ist. Konkret kann die Vorrichtung in einer Anlage zur Herstellung von Polyethylen, insbesondere von LDPE eingesetzt werden. Die Verwendung der Vorrichtung in vergleichbaren Anlagen ist möglich. Allgemein ist die Vorrichtung dazu geeignet und vorgesehen, um Ventile zu betätigen, die in Umgebungen mit Betriebsdrücken von 2000 bar (g) oder mehr verwendet werden und einen sicheren Betrieb bei möglichst hoher Stellgenauigkeit erfordern. Die Vorrichtung kann in explosionsgefährdeten Bereichen eingesetzt werden.

Die Vorrichtung weist eine pneumatische Antriebseinheit 10 auf, die, wie in den Figuren 1 bis 3 gut zu sehen, mit einem Halterahmen 28 verbunden ist. Der Halterahmen 28, auch Rahmenlaterne oder Antriebslaterne genannt, weist zwei parallele Halteplatten 29, 30 auf, die durch Verbindungsstangen 31 voneinander beabstandet angeordnet sind. Die Antriebseinheit 10 ist an eine der beiden Halteplatten 29, 30 angeflanscht, beispielsweise angeschraubt. Andere Ausgestaltungen des Halterahmens 28 sind möglich.

Die pneumatische Antriebseinheit 10 ist bei dem vorliegenden Ausführungsbeispiel als pneumatische Kolben-Zylindereinheit 26 ausgeführt. Konkret ist die Kolbenzylindereinheit 26 als ein doppeltwirkender genormter Pneumatikzylinder (ISO-Zylinder) ausgeführt. Andere Pneumatikzylinder sind möglich. Der Pneumatikzylinder bzw. die Kolben-Zylindereinheit 26 umfasst zwei Kammern, die mit Druckluft beaufschlagt werden und einen linear beweglichen Pneumatikkolben mit einer Kolbenstange 32, die aus dem Zylinder der Kolben-Zylindereinheit 26 herausragt. Durch die Druckbeaufschlagung der Kolbenseiten ergibt sich eine Kraft, die zu einer Positionsänderung des Pneumatikkolbens und der Kolbenstange 32 führt. Die pneumatische Kolben-Zylindereinheit 26 ist hinsichtlich ihrer Grundmaße, Anschlüsse und Befestigungsteile genormt, was eine einfache Austauschbarkeit der Einheit ermöglicht. (siehe z.B. ISO 15552)
Der hier eingesetzte Norm-Zylinder ist mit Dichtungen und Fetten bestückt, um interne Reibungseffekte des Zylinders möglichst auf ein Minimum zu reduzieren. Dies ermöglicht auch im Falle einer Richtungsumkehr des Antriebs ein fast augenblickliches Ansprechen des Antriebs bei kleiner Stellsignaländerung und somit auch in diesem Fall eine hohe Stellgenauigkeit.

Die Erfindung ist nicht auf die dargestellte pneumatische Kolben-Zylindereinheit 26 eingeschränkt. Andere pneumatische Antriebseinheiten 10 sind möglich. Beispielsweise kann die pneumatische Antriebseinheit 10 als pneumatischer Schwenkantrieb, insbesondere als pneumatischer Drehflügelantrieb ausgestaltet sein, der an anderer Stelle näher beschrieben wird.

Wie in den Figuren 1 bis 5 gezeigt, ist die pneumatische Antriebseinheit 10 die einzige Antriebseinheit, die das für den Antrieb des Gewindetriebs 11 erforderliche Drehmoment aufbringt. Dadurch wird die Regelung der Vorrichtung im Vergleich zur früheren Hochdruckarmaturen vereinfacht, die zwei gegenläufige Pneumatikzylinder synchronisieren.

Die pneumatische Antriebseinheit 10 ist mit einem Gewindetrieb 11 gekoppelt, der ebenfalls am Halterahmen 28 befestigt ist und zwar unter einem Winkel von 90° bezogen auf die Antriebseinheit 10. Konkret verlaufen die Längsachsen der Antriebseinheit 10 und des Gewindetriebs 11 senkrecht zueinander. Dazu ist der Gewindetrieb 11 an einer Längsseite des Halterahmens 28 befestigt. Andere Positionen des Gewindetriebs 11 bezogen auf die Antriebseinheit 10 sind in Abhängigkeit von der Kopplung der beiden Einheiten möglich.

Der Gewindetrieb 11 weist ein Gehäuse 12 auf, in dem eine Spindel 13 und eine Spindelmutter 14 angeordnet sind. Die Spindel 13 erstreckt sich durch die Spindelmutter 14, die entlang der Spindel 13 durch eine Drehbewegung der Spindel 13 axial bewegbar ist. Dadurch wird in an sich bekannter Weise eine rotatorische Antriebsbewegung der Spindel 13 in eine translatorische Abtriebsbewegung der Spindelmutter 14 umgewandelt. Die Antriebsseite 15 des Gewindetriebs 11 ist mit der Antriebseinheit 10 gekoppelt, um die erforderliche rotatorische Antriebsbewegung in den Gewindetrieb 11 einzuleiten. Die Abtriebsseite 16 des Gewindetriebs 11 kann mit dem Ventil verbunden werden, um die translatorische Abtriebsbewegung des Gewindetriebs 11 auf das Ventil, konkret die Ventilspindel bzw. den Ventilschaft zu übertragen.

Für das Getriebe wird nicht, wie im Stand der Technik, ein Kugelgewindetrieb, sondern ein als Getriebe 17 ausgebildeter Gewindetrieb 11 eingesetzt, der die Antriebskraft der pneumatischen Antriebseinheit 10 in eine Abtriebskraft des Gewindetriebs 11 zur Betätigung des Ventils übersetzt. Konkret ist der Gewindetrieb 11 als Planetenrollengewindetrieb ausgebildet. Dieser zeichnet sich durch höhere Traglastzahlen im Vergleich zu konventionellen Kugelgewindetrieben aus. Da die Tragzahlen eine Kenngröße für die Lebensdauer unter Last darstellt, können durch den Einsatz des Planentenrollentriebs höhere Stellkräfte als bei Kugelgewindetrieben gewährleistet werden.

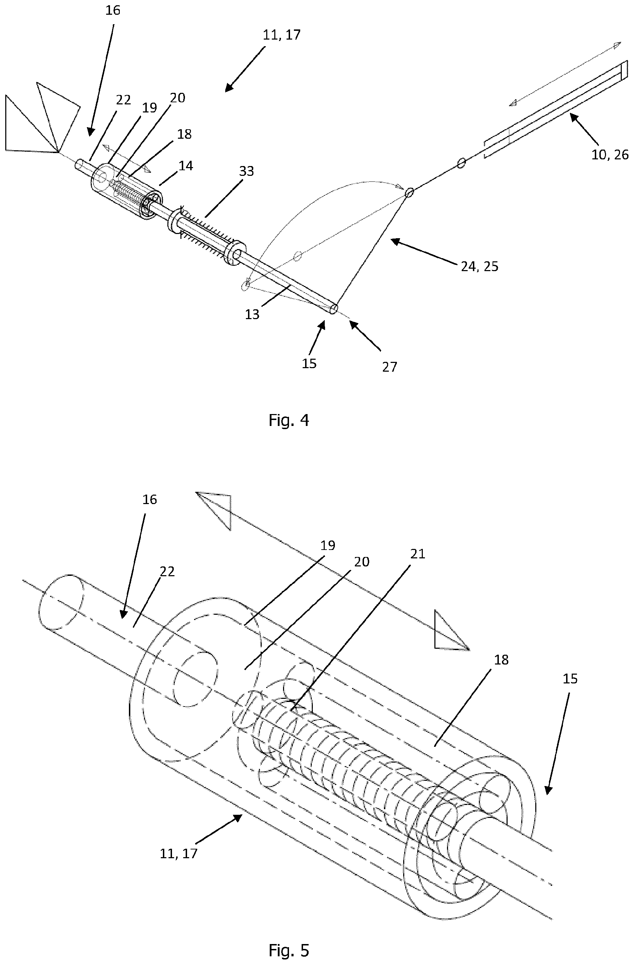

Wie in den Figuren 4, 5 dargestellt, weist der Planetenrollengewindetrieb mehrere Planetenrollen 18 auf, die auf dem Umfang der Spindel 13 gleichmäßig verteilt angeordnet sind. Beispielsweise können 9 Planetenrollen 18 vorgesehen sein. Eine andere Anzahl von Planetenrollen 18 ist möglich. Die beiden axialen Enden der Planetenrollen 18 sind in Führungsringen gelagert, der jeweils koaxial zur Spindel 13 angeordnet sind. Die Getriebefunktion wird durch wenigstens einen innen verzahnten Ring, insbesondere durch zwei innen verzahnte Ringe bewirkt, die im Bereich der axialen Enden der Planetenrollen 18 angeordnet sind und mit diesen kämmen. Die Planetenrollen 18 weisen entsprechende Verzahnungen auf. Die Ringe sind drehfest der Spindelmutter 14 verbunden bzw. bilden mit dieser eine Einheit. Wie in Fig. 4 gezeigt, ist die Spindel 13 durch eine Spindellagerungseinheit 33 gelagert, die auf der Antriebsseite 15 des Gewindetriebs 11 zwischen dem Getriebe 17 und der pneumatischen Antriebseinheit 10 angeordnet ist. Die Spindellagerungseinheit 33 kann beispielsweise mit Schrägkugellagern oder Axial-Pendelrollenlagern ausgebildet sein. Andere Lager sind möglich. Derartige Planetenrollengewindetriebe sind an sich bekannt.

Auf der Abtriebsseite 16 des Gewindetriebs 11 weist die Spindelmutter 14 einen Kolben 19 auf, der für die Anbindung des Getriebes 17 an das Ventil vorgesehen ist. Der Kolben 19 und die Spindelmutter 14 sind koaxial angeordnet.

Die Spindelmutter 14 und der Kolben 19 können einteilig, d. h. monolithisch ausgebildet sein. Alternativ können die Spindelmutter 14 und der Kolben 19 als gesonderte Bauteile verbunden, beispielsweise verschweißt oder verschraubt sein.

Der Kolben 19 ist im Gehäuse 12 axial und rotationsfrei geführt und überträgt die Stellbewegung der Spindelmutter 14 auf das Ventil. Im Kolben ist eine Verdrehsicherung für die Spindelmutter integriert. Das Gehäuse 12 ist so dimensioniert, dass der Kolben 19 den für die Stellbewegung erforderlichen Hub ausführen kann. Wie in Fig. 5 gezeigt, ist der Kolben so dimensioniert, dass zwischen dem Kolbenboden und der Stirnseite des Getriebes 17, konkret den axialen Enden der Planetenrollen 18 ein Freiraum 20 ausgebildet ist, um eine Kollision des abtriebsseitigen Spindelendes 21 mit dem Kolbenboden zu vermeiden, wenn die Spindelmutter 14 in der Endlage angeordnet ist.

Wie in den Figuren 4, 5 weiter zu erkennen, weist der Kolben 19 einen Zapfen 22 auf, der bei diesem Ausführungsbeispiel koaxial mit dem Kolben 19 ausgebildet ist. Eine andere Position des Zapfens 22 ist möglich. Der Zapfen 22 ist aus dem Gehäuse 12 herausgeführt und kann bspw. als Zweiflach ausgeführt sein, der im Gehäusedeckel geführt wird.

Um mögliche Druckerhöhungen im Getriebegehäuse durch Staudrücke zu reduzieren, ist im Dichtungsdeckel eine spiralförmige Nut eingestochen (nicht dargestellt).

Um das Getriebe 17 mit dem Ventil zu verbinden, ist eine Kupplung 23 mit dem Zapfen 22 verbunden. Die Kupplung 23 weist ein geschlitztes Gewinde auf. Die axiale Position der Kupplung wird zunächst über das Gewinde festgelegt und anschließend mittels eines geteilten Rings geklemmt. Ein weiterer Klemmring kann um die Kupplung 23 geklemmt werden, um zusätzliche Anbauten zu ermöglichen. Zu den Anbauten zählen: Stellungsregler, LVDTs oder Endlagenschalter.

Auf die eigentliche Ventilspindel ist an deren Ende ein geschlitztes Klötzchen aufgeschraubt und mit durch eine radiale Klemmkraft gesichert. Das Klötzchen besitzt beidseitig sphärische Flächen, die gegebenenfalls Winkelversätze ausgleichen. Axial wird das Klötzchen mit einem in die Kupplung 23 geschraubten Flansch gehalten. Flansch und Kupplung 23 besitzen ihrerseits konische Gegenflächen. Der eingeschraubte Flansch wird mit Hilfe eines Blechs gegen Verdrehen gesichert.

Um die Genauigkeit weiter zu erhöhen, wird die Spindelmutter 14 spielfrei "vorgespannt". Hierdurch wird insbesondere das Ansprechverhalten bei Richtungsumkehr verbessert. Da es sich um keine tatsächliche Vorspannung handelt, sondern um eine Toleranzfertigung nahe einer 0 Toleranz, ergibt sich kein Einfluss auf den Wirkungsgrad des Getriebes.

Damit das Getriebe dauerhaft geschmiert ist, befindet sich der Gewindetrieb 11 in einem Gehäuse 12 mit Ölfüllung.

Um das erforderliche Drehmoment in das Getriebe 17 einzuleiten, weist die Spindel 13 am antriebsseitigen Spindelende 27 einen Vierkant 34 auf. An diesen Vierkant 34 ist ein Vorschaltgetriebe 24, insbesondere ein Koppelgetriebe 25 geklemmt. Zu den Vorteilen der Klemmverbindung und deren Alternativen wird auf die Beschreibungseinleitung verwiesen.

Das Koppelgetriebe 25 ist in dem Beispiel gemäß Figuren 1 bis 5 als Hebelgestänge ausgebildet, das die Kolben-Zylindereinheit 26 mit dem Gewindetrieb 11 koppelt. Die Koppelung des Hebelgestänges und der Kolben-Zylindereinheit 26 erfolgt über ein Hebelgelenk welches aus zwei Kugelgelenkköpfen besteht. Die Kugelgelenkköpfe sind mit Bolzen mit einer Übergangspassung verbunden und durch Norm-Splinte axial gesichert.

Antriebsseitig ist das Hebelgelenk mit einer zweiteiligen Kupplung verbunden. Die Teilungsebene der Kupplung liegt senkrecht zu der Bewegungsrichtung des Antriebszylinders. Der eine Teil der Kupplung besitzt eine Öse, um die Verbindung zum Hebelgelenk herzustellen, der andere Teil ein Innengewinde, welches auf das Außengewinde der Antriebskolbenstange aufgeschraubt wird. Der Kupplungsteil mit Gewinde besitzt zudem eine Nut an der dem Gewinde gegenüberliegenden Stirnfläche. Diese Nut dient der Aufnahme eines Blechs, welches zur Sicherung gegen Verdrehen der Kupplung verwendet wird. Da sowohl Kupplung als auch Schwenkhebel teilbar sind, besteht die Möglichkeit, die wartungsbedürftigen Kugelgelenkköpfe ohne vollständige Demontage der Antriebseinheit auszubauen und zu warten oder im Bedarfsfall zu ersetzen.

Das Blech zur Verdrehsicherung der Kupplung besitzt beidseitig kreissegmentförmige Aussparungen. An diesen Stellen wird das Blech in Nuten gesetzt, die sich an zwei Laufbuchsen befinden. Diese Laufbuchsen sind auf Stangen der Antriebslaterne geführt. Der entstandene Formschluss führt letztlich zu der gewollten Sicherung gegen Rotation an der Kupplung. Um etwaige Reibungsverluste in den Laufbuchsen zu minimieren, sind die Laufbuchsen innen mit Linern aus PTFE/Kohle ausgekleidet.

Um die Antriebskraft in den Endlagen weiter zu erhöhen, beziehungsweise um die Kraft über den gesamten Stellweg des Ventils konstant zu halten, ist auch eine Variante mit Zahnrad anstatt eines Hebelgelenkes denkbar. In diesem Fall würde an der Kolbenstange des Normzylinders eine Zahnstange befestigt und auf der Spindel 13 des Gewindetriebes 11 wird ein Zahnrad oder Zahnradsegment befestigt. Die Befestigung kann auch hierbei sowohl formschlüssig über einen geklemmten Vierkant oder kraftschlüssig durch einen Kegelpressverband geschehen. Damit der Eingriff der Zahnflanken näherungsweise spielfrei ist, kann ein Federelement auf die Zahnstange aufgesetzt werden, um die Zahnflanken von Zahnrad und Zahnstange permanent aneinander zu pressen. Das Federelement kann als klassische Spiralfeder oder als Weichstofffeder ausgeführt werden. Damit keine zusätzlichen Verluste durch Reibkräfte auftreten, wird die Feder an einer Rolle befestigt, welche auf der Zahnstange abrollt.

Alternativ zu Zahnrad oder Hebelgestänge und der Kraftaufbringung durch Normzylinder, ist auch eine Lösung mittels Schwenkantrieb mit Drehflügel-Pneumatik möglich. Dieser Antrieb kann ohne Zwischengestänge oder Zahnrad direkt über einen genormten Anschluss für Schwenk- oder Drehantriebe nach ISO 5210 oder ISO 5211 mit dem Planetenrollen-Getriebe verbunden werden. Das Wirkprinzip des Drehflügelantriebs ist je nach Ausführung einfach- (mit Federrückstellung) oder doppeltwirkend (ohne Federrückstellung).

Die Vorrichtung funktioniert wie folgt, wie anhand Fig. 4 erläutert. Die Kolben-Zylindereinheit 26 führt eine lineare Bewegung aus, die auf das Koppelgetriebe 25 übertragen wird (siehe Doppelpfeil). Der Stellweg der Kolben-Zylindereinheit 26 ist im Vergleich zum gewünschten Stellweg zur Betätigung des Ventils relativ groß. Die Antriebsbewegung der Kolben-Zylindereinheit 26 wird am antriebsseitigen Spindelende 27 des Gewindetriebs 11 in eine Drehbewegung der Spindel 13 umgewandelt (siehe gekrümmter Doppelpfeil). Die Drehbewegung der Spindel 13 treibt die Spindelmutter 14 an, die eine translatorische Bewegung ausführt (siehe Doppelpfeil). Die translatorische Bewegung der Spindelmutter 14 wird zur Betätigung des Ventils auf die Ventilspindel übertragen.

Durch die Hebelwirkung des Koppelgetriebes 25 erfolgt bei der Einleitung des Antriebsmomentes in die Spindel 13 eine erste Kraftübersetzung. Der als Getriebe 17 ausgebildete Gewindetrieb 11 bewirkt eine zweite Kraftübersetzung. Die auf der Abtriebsseite 16 des Gewindetriebs 11 zur Verfügung stehende Abtriebskraft, die auf die Ventilspindel übertragen wird, ist entsprechend höher als die von der pneumatischen Antriebseinheit 10 bzw. der Kolben-Zylindereinheit 26 aufgebrachte Antriebskraft. Mit Blick auf das Verhältnis zwischen Abtriebskraft und Antriebskraft sind Übersetzungsbereiche von 10:1 bis 200:1, insbesondere 30:1 bis 100:1 möglich.

Gleichzeitig wird der Stellweg der Kolben-Zylindereinheit 26 über das Koppelgetriebe 25 und das Getriebe 17 so stark untersetzt, dass der Stellweg der Spindelmutter 14 bzw. des Kolbens 19 eine ausreichend präzise Steuerung des Ventils ermöglicht.

### Bezugszeichenliste

- 10: Antriebseinheit
- 11: Gewindetrieb
- 12: Gehäuse
- 13: Spindel
- 14: Spindelmutter
- 15: Antriebsseite
- 16: Abtriebsseite
- 17: Gewinde
- 18: Planetenrollen
- 19: Kolben
- 20: Freiraum
- 21: abtriebsseitiges Spindelende
- 22: Zapfen
- 23: Kupplung
- 24: Vorschaltgetriebe
- 25: Koppelgetriebe
- 26: pneumatische Kolben-Zylindereinheit
- 27: antriebsseitiges Spindelende
- 28: Halterahmen
- 29: Halteplatte
- 30: Halteplatte
- 31: Verbindungsstange
- 32: Kolbenstange
- 33: Spindellagerungseinheit
- 34: Vierkant

## Patentansprüche

1. Hochdruckregelarmatur für eine Hochdruckanlage mit einer Vorrichtung zum Betätigen eines Ventils für eine Hochdruckanlage, insbesondere für eine Anlage zur Herstellung von Polyethylen, mit einer pneumatischen Antriebseinheit (10) und einem Gewindetrieb (11), der ein Gehäuse (12), eine Spindel (13) und eine Spindelmutter (14) aufweist, wobei die Vorrichtung mechanisch mit einem Ventil verbunden ist, und wobei die Antriebsseite (15) des Gewindetriebs (11) mit der Antriebseinheit (10) zum Einleiten einer rotatorischen Antriebsbewegung gekoppelt und die Abtriebsseite (16) des Gewindetriebs (11) mit dem Ventil zur Übertragung einer translatorische Abtriebsbewegung verbunden ist, und wobei der Gewindetrieb (11) ein Getriebe (17) bildet, das eine Antriebskraft der Antriebseinheit (10) in eine Abtriebskraft des Gewindetriebs (11) zur Betätigung des Ventils übersetzt.

2. Hochdruckregelarmatur nach Anspruch 1,
**dadurch gekennzeichnet, dass**
ein Vorschaltgetriebe (24), insbesondere ein Übersetzungsvorschaltgetriebe, die Antriebseinheit (10) und den Gewindetrieb (11) verbindet.

3. Hochdruckregelarmatur nach Anspruch 1 oder 2,
**dadurch gekennzeichnet, dass**
der Gewindetrieb (11) einen Planetenrollengewindetrieb umfasst.

4. Hochdruckregelarmatur nach einem der Ansprüche 1 bis 3,
**dadurch gekennzeichnet, dass**
der Planetenrollengewindetrieb mehrere Planetenrollen (18) aufweist, die zwischen der Spindel (13) und der Spindelmutter (14) auf deren Umfang verteilt angeordnet und mit wenigstens einem innenverzahnten Ring (33) in Eingriff sind, der mit der Spindelmutter (14) drehfest verbunden ist.

5. Hochdruckregelarmatur nach einem der vorhergehenden Ansprüche,
**dadurch gekennzeichnet, dass**
die Spindel (13) drehbar und die Spindelmutter (14) axial entlang der Spindel (13) verschieblich im Gehäuse (12) gelagert sind.

6. Hochdruckregelarmatur nach einem der vorhergehenden Ansprüche,
**dadurch gekennzeichnet, dass**
die Spindelmutter (14) mit einem Kolben (19) verbunden oder als Kolben ausgebildet ist, der im Gehäuse (12) axial geführt und mit dem Ventil verbindbar ist, wobei das Gehäuse (12) an den Hub des Kolbens (19) angepasst ist.

7. Hochdruckregelarmatur nach Anspruch 6,
**dadurch gekennzeichnet, dass**
der Kolben (19) und die Spindelmutter (14) einen Freiraum (20) zur Aufnahme des abtriebsseitigen Spindelendes (21) bilden.

8. Hochdruckregelarmatur nach Anspruch 6 oder 7,
**dadurch gekennzeichnet, dass**
der Kolben (19) einen Zapfen (22) aufweist, der aus dem Gehäuse (12) axial herausgeführt und mit dem Ventil durch eine Kupplung (23) verbindbar ist.

9. Hochdruckregelarmatur nach einem der vorhergehenden Ansprüche,
**dadurch gekennzeichnet, dass**
der Gewindetrieb (11) ölgeschmiert ist.

10. Hochdruckregelarmatur nach einem der Ansprüche 2 bis 9,
**dadurch gekennzeichnet, dass**
das Vorschaltgetriebe (24) ein Koppelgetriebe (25) und/oder ein Zahnstangengetriebe umfasst.

11. Hochdruckregelarmatur nach einem der vorhergehenden Ansprüche,
**dadurch gekennzeichnet, dass**
die Antriebseinheit (10) wenigstens eine pneumatische Kolben-Zylindereinheit (26) umfasst.

12. Hochdruckregelarmatur nach einem der Ansprüche 1 bis 9,
**dadurch gekennzeichnet, dass**
die Antriebseinheit (10) direkt mit der Antriebsseite (15) des Gewindetriebs (11) verbunden ist.

13. Hochdruckregelarmatur nach Anspruch 11,
**dadurch gekennzeichnet, dass**
die Antriebseinheit (10) wenigstens einen pneumatischen Schwenkantrieb umfasst.

14. Hochdruckregelarmatur nach einem der vorhergehenden Ansprüche,
**dadurch gekennzeichnet, dass**
das antriebsseitige Spindelende (27) formschlüssig und/oder kraftschlüssig mit der Antriebseinheit (10), insbesondere mit dem Vorschaltgetriebe (24) verbunden ist.

15. Hochdruckregelarmatur nach einem der vorhergehenden Ansprüche,
**dadurch gekennzeichnet, dass**
die Antriebseinheit (10) als einzige Antriebseinheit mit der Spindel (13) verbunden ist.

16. Hochdruckregelarmatur nach einem der vorhergehenden Ansprüche,
**dadurch gekennzeichnet, dass**
das Übersetzungsverhältnis zwischen Abtriebskraft und Antriebskraft 10:1 bis 200:1, insbesondere 30:1 bis 100:1 beträgt.

## Claims

1. High-pressure control valve for a high-pressure plant with a device for actuating a valve for a high-pressure plant, in particular for a plant for the production of polyethylene, with a pneumatic drive unit (10) and a screw drive (11) which has a housing (12), a spindle (13) and a spindle nut (14), the device being mechanically connected to a valve, and wherein the input side (15) of the screw drive (11) is coupled to the input unit (10) for initiating a rotational input motion and the output side (16) of the screw drive (11) is coupled to the valve for transmitting a translational output motion, and wherein the screw drive (11) forms a transmission (17) which translates an input force of the input unit (10) into an output force of the screw drive (11) for actuating the valve.

2. High pressure control valve according to claim 1,
**characterized in that**
an upstream gear (24), in particular a transmission ratio upstream gear, connects the drive unit (10) and the threaded drive (11).

3. High pressure control valve according to claim 1 or 2,
**characterized in that**
the screw drive (11) comprises a planetary roller screw drive.

4. High-pressure control valve according to one of claims 1 to 3,
**characterized in that**
the planetary roller screw has a plurality of planetary rollers (18) which are arranged between the spindle (13) and the spindle nut (14) distributed around the circumference thereof and are engaged with at least one internally toothed ring (33) which is connected to the spindle nut (14) in a rotationally fixed manner.

5. High pressure control valve according to any one of the preceding claims,
**characterized in that**
the spindle (13) is rotatably mounted and the spindle nut (14) is axially displaceable along the spindle (13) in the housing (12).

6. High pressure control valve according to any one of the preceding claims,
**characterized in that**
the spindle nut (14) is connected to a piston (19) or is designed as a piston which is axially guided in the housing (12) and can be connected to the valve, the housing (12) being adapted to the stroke of the piston (19).

7. High pressure control valve according to claim 6,
**characterized in that**
the piston (19) and the spindle nut (14) form a free space (20) for receiving the output-side spindle end (21).

8. High pressure control valve according to claim 6 or 7,
**characterized in that**
the piston (19) has a pin (22) which is led axially out of the housing (12) and can be connected to the valve by a coupling (23).

9. High pressure control valve according to any one of the preceding claims,
**characterized in that**
the screw drive (11) is oil-lubricated.

10. High pressure control valve according to any one of claims 2 to 9,
**characterized in that**
the upstream gear (24) comprises a coupling gear (25) and/or a rack gear.

11. High pressure control valve according to any one of the preceding claims,
**characterized in that**
the drive unit (10) comprises at least one pneumatic piston-cylinder unit (26).

12. High pressure control valve according to any one of claims 1 to 9,
**characterized in that**
the drive unit (10) is directly connected to the drive side (15) of the screw drive (11).

13. High pressure control valve according to claim 11,
**characterized in that**
the drive unit (10) comprises at least one pneumatic swivel drive.

14. High pressure control valve according to any one of the preceding claims,
**characterized in that**
the drive-side spindle end (27) is positively and/or non-positively connected to the drive unit (10), in particular to the upstream gear unit (24).

15. High pressure control valve according to any one of the preceding claims,
**characterized in that**
the drive unit (10) is connected to the spindle (13) as the only drive unit.

16. High pressure control valve according to any one of the preceding claims,
**characterized in that**
the transmission ratio between output force and input force is 10:1 to 200:1, in particular 30:1 to 100:1.

## Revendications

1. Vanne de régulation haute pression pour une installation haute pression avec un dispositif pour l'actionnement d'une vanne pour une installation haute pression, en particulier pour une installation de fabrication de polyéthylène, avec une unité d'entraînement pneumatique (10) et une commande filetée (11) qui présente un boîtier (12), une broche (13) et un écrou de broche (14), le dispositif étant relié mécaniquement à une vanne, et dans lequel le côté d'entrée (15) de l'entraînement fileté (11) est couplé à l'unité d'entraînement (10) pour initier un mouvement d'entraînement rotatif et le côté de sortie (16) de l'entraînement fileté (11) est relié à la soupape pour transmettre un mouvement de sortie en translation, et dans lequel l'entraînement fileté (11) forme un engrenage (17) qui transforme une force d'entraînement de l'unité d'entraînement (10) en une force de sortie de l'entraînement fileté (11) pour actionner la soupape.

2. Vanne de régulation haute pression selon la revendication 1,
**caractérisé en ce qu'**
un engrenage primaire (24), en particulier un engrenage primaire de transmission, relie l'unité d'entraînement (10) et l'engrenage fileté (11).

3. Vanne de régulation haute pression selon la revendication 1 ou 2,
**caractérisé en ce que**
l'entraînement fileté (11) comprend un entraînement fileté à rouleaux planétaires.

4. Vanne de régulation haute pression selon l'une des revendications 1 à 3,
**caractérisé en ce que**
la vis à rouleaux planétaires comporte plusieurs rouleaux planétaires (18) qui sont disposés entre la tige (13) et l'écrou de tige (14) en étant répartis sur la périphérie de ceux-ci et qui sont en prise avec au moins une bague à denture intérieure (33) qui est solidaire en rotation de l'écrou de tige (14).

5. Vanne de régulation haute pression selon l'une des revendications précédentes,
**caractérisé en ce que**
la tige (13) est montée de manière à pouvoir tourner et l'écrou de tige (14) est monté dans le corps (12) de manière à pouvoir se déplacer axialement le long de la tige (13).

6. Vanne de régulation haute pression selon l'une des revendications précédentes,
**caractérisé en ce que**
l'écrou de tige (14) est relié à un piston (19) ou est conçu comme un piston, qui est guidé axialement dans le boîtier (12) et peut être relié à la vanne, le boîtier (12) étant adapté à la course du piston (19).

7. Vanne de régulation haute pression selon la revendication 6,
**caractérisé en ce que**
le piston (19) et l'écrou de tige (14) forment un espace libre (20) pour recevoir l'extrémité de tige (21) côté sortie.

8. Vanne de régulation haute pression selon la revendication 6 ou 7,
**caractérisé en ce que**
le piston (19) présente un tourillon (22) qui sort axialement du corps (12) et qui peut être relié à la vanne par un accouplement (23).

9. Vanne de régulation haute pression selon l'une des revendications précédentes,
**caractérisé en ce que**
l'engrenage fileté (11) est lubrifié à l'huile.

10. Vanne de régulation haute pression selon l'une des revendications 2 à 9,
**caractérisé en ce que**
l'engrenage amont (24) comprend un engrenage de couplage (25) et/ou un engrenage à crémaillère.

11. Vanne de régulation haute pression selon l'une des revendications précédentes,
**caractérisé en ce que**
l'unité d'entraînement (10) comprend au moins une unité piston-cylindre pneumatique (26).

12. Vanne de régulation haute pression selon l'une des revendications 1 à 9,
**caractérisé en ce que**
l'unité d'entraînement (10) est directement reliée au côté entraînement (15) de la commande filetée (11).

13. Vanne de régulation haute pression selon la revendication 11,
**caractérisé en ce que**
l'unité d'entraînement (10) comprend au moins un entraînement pneumatique pivotant.

14. Vanne de régulation haute pression selon l'une des revendications précédentes,
**caractérisé en ce que**
l'extrémité de la tige (27) côté entraînement est reliée par complémentarité de forme et/ou par force à l'unité d'entraînement (10), en particulier à l'engrenage amont (24).

15. Vanne de régulation haute pression selon l'une des revendications précédentes,
**caractérisé en ce que**
l'unité d'entraînement (10) est reliée à la tige (13) en tant qu'unité d'entraînement unique.

16. Vanne de régulation haute pression selon l'une des revendications précédentes,
**caractérisé en ce que**
le rapport de transmission entre la force de sortie et la force d'entraînement est de 10:1 à 200:1, en particulier de 30:1 à 100:1.
